# EUROPÄISCHE PATENTSCHRIFT

(11) **EP 1 852 304 B1**
(45) Veröffentlichungstag und Bekanntmachung des Hinweises auf die Patenterteilung: **17.06.2009**
(21) Anmeldenummer: 07008314.2
(22) Anmeldetag: 24.04.2007
(51) Int. Cl.: B60Q 1/04, B60Q 1/26, F16B 21/04

(54) **Befestigungsanordnung mit lösbarer Verrastung**
Fitting assembly with releasable catch mechanism
Dispositif de fixation doté d'un cliquet amovible

(30) Priorität: 04.05.2006 DE 202006007180 U
(43) Veröffentlichungstag der Anmeldung: 07.11.2007
(73) Patentinhaber: Böllhoff Verbindungstechnik GmbH, 33649 Bielefeld (DE)
(72) Erfinder: Dembowsky, Hans-Joachim, 21035 Hamburg (DE); Figge, Hans-Ullrich, 33758 Schloß-Holte-Stuckenbrock (DE); Jodeleit, Martin, 33617 Bielefeld (DE)
(74) Vertreter: Hauck Patent- und Rechtsanwälte

(56) Entgegenhaltungen:
- DE-A1- 19 544 623
- DE-U1-3202004 012 73
- DE-U1-6202005 006 37
- FR-A1- 2 833 661

## Beschreibung

Die vorliegende Erfindung betrifft eine Befestigungsanordnung zum lösbaren Befestigen eines Bauteils an einem plattenförmigen Trägerteil, insbesondere eines Rückleuchtenteils an einem Karosserieteils eines Fahrzeuges. Insbesondere betrifft die Erfindung eine Befestigungsanordnung, bei der die lösbare Befestigung des Bauteils an dem Trägerteil durch eine Verrastung erfolgt.

Derartige Befestigungsanordnungen sind in großer Vielfalt bekannt. Hierbei dient die Verrastung dazu, das Bauteil und Trägerteil in einem normalen Betriebszustand mit einander zu verbinden, und bei Bedarf die Verbindung zwischen dem Bauteil und Trägerteil zu lösen.

Um die Verrastung zu lösen, muss sie normalerweise zugänglich sein. In bestimmten Anwendungsfällen, beispielsweise wenn die Befestigungsanordnung zum Befestigen eines Rückleuchtenteils an einem Karosserieteil eines Fahrzeuges dient, ist die Verrastung jedoch nicht oder nur sehr schwer zugänglich.

Der vorliegenden Erfindung liegt die Aufgabe zugrunde, eine Befestigungsanordnung zum lösbaren Befestigen eines Bauteils an einem plattenförmigen Trägerteil mittels einer Verrastung zu schaffen, bei der die Verrastung trotz schwieriger Zugänglichkeit problemlos gelöst werden kann.

Eine erfindungsgemäß ausgebildete Befestigungsanordnung zum Lösen dieser Aufgabe ist in Anspruch 1 definiert.

Erfindungsgemäß besteht die Befestigungsanordnung aus einem Rastglied mit einem an dem Trägerteil festlegbaren hülsenartigen Befestigungsabschnitt und einem an dem Befestigungsabschnitt angeformten Rastabschnitt, der zum Halten des Bauteils mit einem entsprechend ausgebildetem Rastabschnitt des Bauteils in Rasteingriff bringbar ist, und einem Lösebolzen, der in dem hülsenartigen Befestigungsabschnitt des Rastgliedes axial verschiebbar geführt ist, mit einem Schaftabschnitt aus dem Befestigungsabschnitt vorsteht und zum Lösen des Rasteingriffes zwischen den Rastabschnitten axial verstellbar ist.

Der aus dem Befestigungsabschnitt des Rastgliedes vorstehende Abschnitt des Lösebolzens kann beliebig lang gemacht werden, so dass der Rasteingriff zwischen dem Rastglied und dem Trägerteil und damit die Verbindung zwischen dem Trägerteil und dem zu befestigenden Bauteil problemlos gelöst werden kann, selbst wenn der Rasteingriff in einem im Übrigen unzugänglichen Bereich liegt. Die erfindungsgemäß ausgebildete Befestigungsanordnung kann daher insbesondere zum Befestigen einer Rückleuchte an einer Fahrzeugkarosserie verwendet werden, wenngleich die Befestigungsanordnung auch auf anderen Gebieten einsetzbar ist.

In weiterer Ausgestaltung der Erfindung ist der Lösebolzen mit dem Rastglied durch eine Nockenführung verbunden, die eine Drehbewegung des Lösebolzens in einer Axialbewegung des Lösebolzens umwandelt. Zum Lösen des Rasteingriffes ist daher lediglich eine Drehbewegung des Lösebolzens erforderlich, die - gegebenenfalls mittels eines Drehwerkzeuges - manuell durchgeführt werden kann.

In weiterer Ausgestaltung der Erfindung ist vorgesehen, dass der Rastabschnitt des Rastgliedes aufweist: einen Profilkörper zum Aufnehmen des Rastabschnittes des zu befestigenden Bauteils und einen am Profilkörper federnd angelenkten Rastarm zum Verrasten mit dem Rastabschnitt des zu befestigenden Bauteils. Bei dieser Ausbildung des Rastabschnittes wird der am Profilkörper federnd angelenkte Rastarm durch eine axiale Verstellbewegung des Lösebolzens ausgelenkt, wodurch die Verrastung und damit die Verbindung zwischen dem Bauteil und Trägerteil freigegeben wird. Diese konstruktive Lösung zeichnet sich durch Einfachheit und Funktionssicherheit aus.

Der das Rastglied an dem Trägerteil festlegende Befestigungsabschnitt kann wie in dem deutschen Gebrauchsmuster DE 20 2004 012 733.4 ausgebildet sein. Es sind jedoch auch andere Lösungen zum Festlegen des Befestigungsabschnittes des Rastgliedes an dem Trägerteil möglich.

Zweckmäßigerweise sind sowohl das Rastglied als auch der Lösebolzen einstückig ausgebildet und durch Spritzgießen hergestellt. Sie bestehen vorzugsweise aus Kunststoff, wenngleich sie auch aus anderen Werkstoffen hergestellt werden können.

Weitere vorteilhafte Ausgestaltungen der Erfindung sind in den Unteransprüchen definiert.

Anhand der Zeichnungen wird ein Ausführungsbeispiel der Erfindung näher erläutert. Es zeigt:
Fig. 1 eine perspektivische Ansicht einer erfindungsgemäß ausgebildeten Befestigungsanordnung aus einem Rastglied und einem Lösebolzen;
Fig. 2 eine Seitenansicht der Befestigungsanordnung der Fig. 1;
Fig. 3 eine Endansicht der Befestigungsanordnung der Fig. 1;
Fig. 4 eine Schnittansicht in Richtung der Pfeile A-A in Fig. 3;
Fig. 5 eine Schnittansicht in Richtung der Pfeile B-B in Fig. 4;
Fig. 6 eine perspektivische Ansicht des Lösebolzens der Befestigungsanordnung in den vorhergehenden Figuren;
Fig. 7 eine perspektivische Ansicht des Rastgliedes der Befestigungsanordnung in der Figuren 1 bis 5;
Fig. 8 eine Draufsicht auf das Rastglied in Fig. 7;
Fig. 9 eine Schnittansicht in Richtung der Pfeile C-C in Fig. 8 mit angedeutetem Trägerteil;
Fig. 10 eine ausschnittsweise perspektivische Darstellung eines Bauteils, das durch die Befestigungsanordnung der vorhergehenden Figuren an dem Trägerteil T zu befestigen ist;
Fig. 11 eine ausschnittsweise perspektivische Ansicht der Befestigungsanordnung und des mit ihm verbundenen Bauteils (ohne Trägerteil).

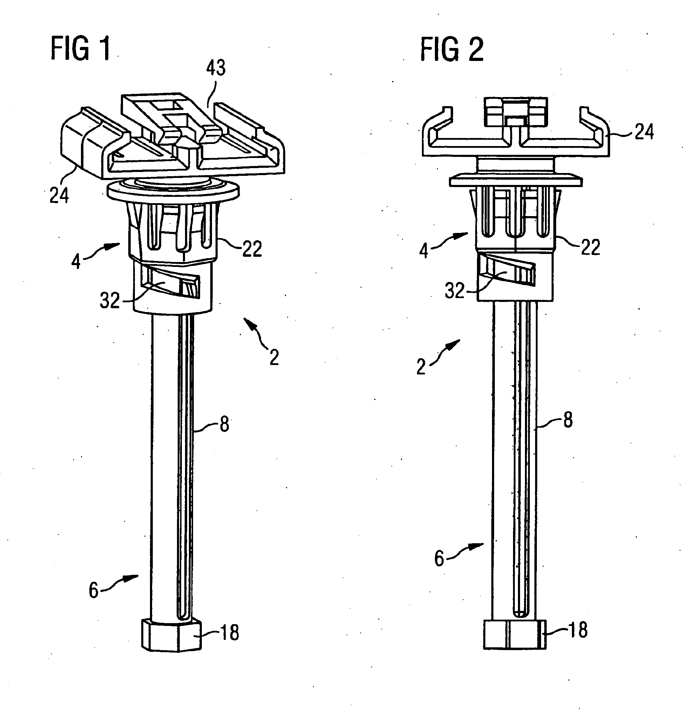

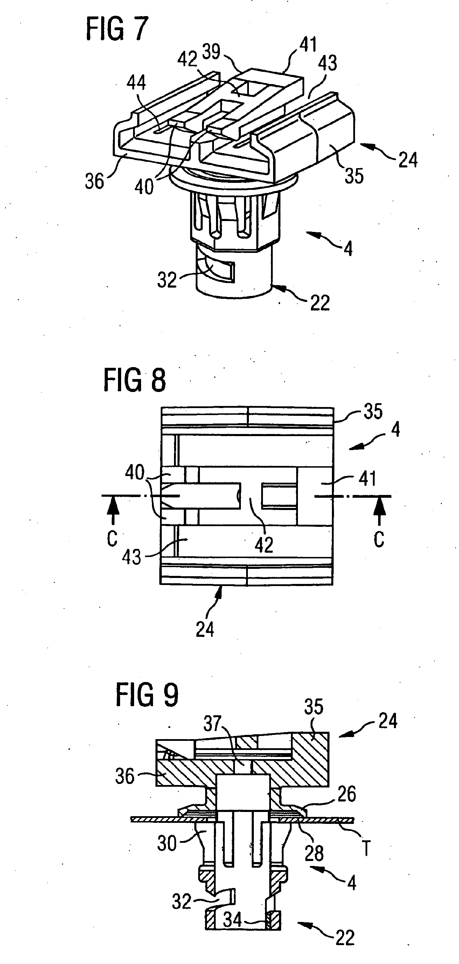

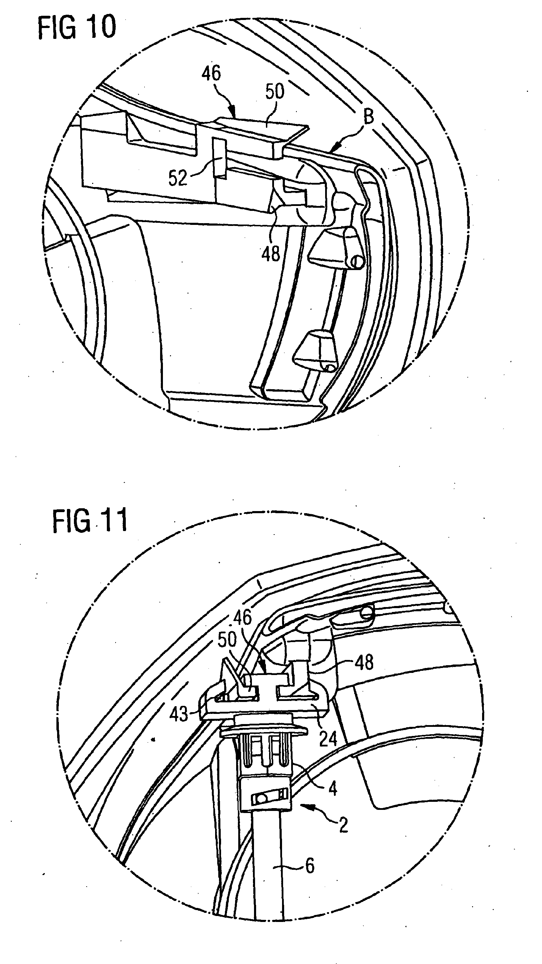

Die in den Figuren 1 bis 5 dargestellte Befestigungsanordnung 2 besteht aus einem Rastglied 4 und einem Lösebolzen 6. Wie in diesen Figuren zu sehen ist, bilden das Rastglied 4 und der Lösebolzen 6 eine vormontierte Einheit, die im dargestellten Ausführungsbeispiel zum Befestigen eines Bauteils B in Form eines Rückleuchtengehäuses (Figuren 10, 11) an einem Trägerteil T in Form eines Karosseriebleches (Fig. 9) dient.

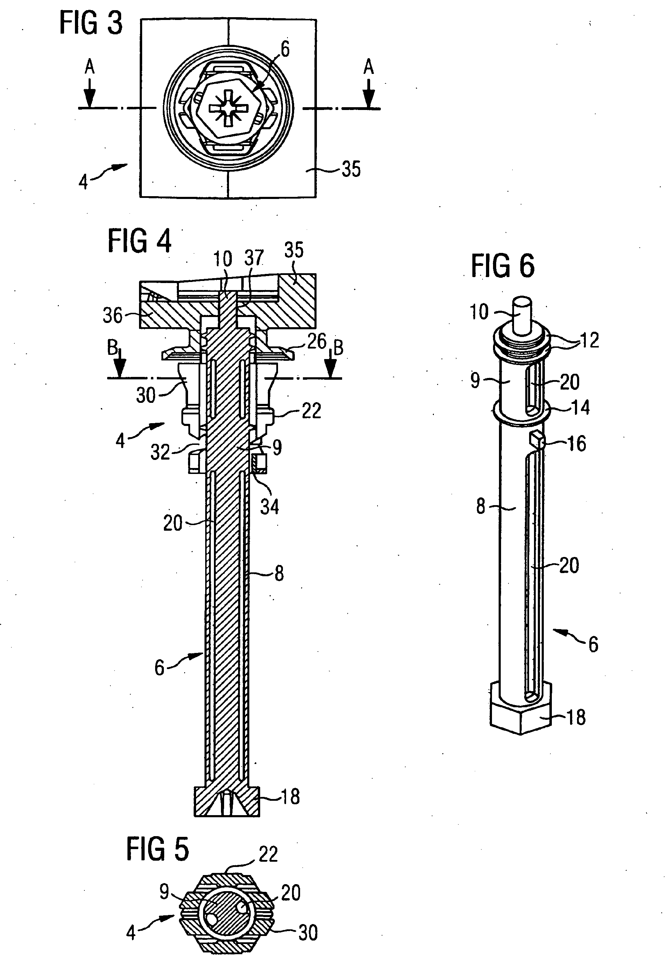

Das Rastglied 4 und der Lösebolzen 6 sind in den Figuren 6 bis 9 als Einzelteile dargestellt. Sie sind jeweils einstückig ausgebildet und bestehen vorzugsweise aus Kunststoff, wenngleich sie grundsätzlich auch aus anderen Werkstoffen hergestellt sein könnten. Die Kunststoffe sind aufeinander abgestimmt und bestehen beispielsweise aus einem schlagzähen Kunststoff wie Polyamid mit einer Faserverstärkung oder einem anderen Thermoplasten. Sowohl das Rastglied 4 wie auch der Lösebolzen 6 werden zweckmäßigerweise durch Spritzgießen hergestellt.

Der in Fig. 6 dargestellte Lösebolzen 6 hat die Form eines Schaftes mit einem vergleichsweise langen Schaftabschnitt 8 und einem kürzeren Schaftabschnitt 9. An dem freien Ende des Schaftabschnittes 9 ist ein axial verlaufender Zapfen 10 verringerten Durchmessers angeformt. Der Schaftabschnitt 9 ist ferner mit ringförmigen Rippen 12, 14 versehen, von denen die Rippen 12 als Dicht- und Führungsrippen und die Rippe 14 als Führungsrippe ausgebildet sind.

Der Schaftabschnitt 9 des Lösebolzens 6 ist ferner mit zwei diametral gegenüberliegenden Nocken 16 versehen, die als radial vom Schaftabschnitt 9 abstehende Vorsprünge ausgebildet sind. An dem vom Zapfen 10 abgewandten Ende ist der Lösebolzen 6 mit einem Antriebsmerkmal 18 zum Drehen des Lösebolzens 6 versehen. Im dargestellten Ausführungsbeispiel besteht das Antriebsmerkmal aus einem Sechskant; es versteht sich jedoch, dass das Antriebsmerkmal zum Ansetzen eines Werkzeuges auch anders, beispielsweise als Schraubendreherschlitz, ausgebildet sein kann.

Im dargestellten Ausführungsbeispiel ist der Lösebolzen 6 mit längs verlaufenden Nuten 20 (siehe auch den Schnitt der Fig. 5) versehen, die der Materialersparnis dienen und im Übrigen keine Funktion haben.

Das in den Figuren 7 bis 9 dargestellte Rastglied 4 besteht aus einem hülsenartigen Befestigungsabschnitt 22 und einem an diesem angeformten Rastabschnitt 24. Der Befestigungsabschnitt 22 dient zum Befestigen des Rastgliedes 4 an dem Trägerteil T (Fig. 9), während der Rastabschnitt 24 zum lösbaren Verbinden (Verrasten) mit dem Bauteil B (Figuren 10, 11) dient.

Der Befestigungsabschnitt 22 des Rastgliedes 4 ist als allgemein hülsenartiges Teil ausgebildet. In dem Bereich, in dem der Befestigungsabschnitt 22 an dem Trägerteil T festgelegt ist (Fig. 9), ist der Befestigungsabschnitt wie in dem deutschen Gebrauchsmuster DE-GM 20 2004 012 733.4 ausgebildet. Er weist einen Ringflansch 26 auf, der eine (in Fig. 9 nach unten) konkav gewölbte Form hat. An seinem Außenrand ist er mit einer axial nach unten gerichteten Dichtlippe 28 versehen.

An den Ringflansch 26 schließt sich ein Zwischenabschnitt an, der einen mehreckigen Querschnitt entsprechend dem Umriss eines Aufnahmeloches des Trägerteils T hat. Dieser Zwischenabschnitt ist mit diametral gegenüberliegenden fensterartigen Durchbrüchen versehen, in denen mehrere Federschenkel 30 angeordnet sind.

Die Federschenkel 30 sind an ihren unteren axialen Enden an dem Zwischenabschnitt angeformt, während sie im Übrigen beabstandet zu dem Material des Zwischenabschnittes so angeordnet sind, dass sie radial einwärts umgebogen werden können. Die Federschenkel 30 haben an ihren oberen axialen Enden einen vorgegebenen Abstand zur Unterseite des Ringflansches 26, so dass das Trägerteil T zwischen der Dichtlippe 28 des Ringflansches 26 und den Stirnflächen der Federschenkel eingespannt werden kann. Die Federschenkel 30 sind ferner an ihren radial äußeren Rändern mit Einführschrägen versehen.

Der Befestigungsabschnitt 22 ist ferner mit zwei diametral gegenüberliegenden, wendelförmig verlaufenden Nockenschlitzen 32 versehen, die sich im dargestellten Ausführungsbeispiel in Umfangsrichtung um ungefähr 90° erstrecken. Die Nockenschlitze 32 bilden zusammen mit den Nocken 16 des Lösebolzens 6 eine Nockenführung, die eine Drehbewegung des Lösebolzens 6 in eine Axialbewegung des Lösebolzens umwandeln, wie noch genauer erläutert wird.

Um die Nocken 16 des Lösebolzens 6 in die Nockenschlitze 32 des Rastgliedes 4 einsetzen zu können, ist der Befestigungsabschnitt 22 an seiner Innenseite mit axial verlaufenden Schrägflächen 34 versehen, wie in den Figuren 4 und 9 angedeutet ist.

Der Rastabschnitt 24 des Rastgliedes 4 besteht aus einem Profilkörper 35, der einen ungefähr rechteckigen, nahezu quadratischen Grundriss hat und an seiner Unterseite an dem hülsenartigen Befestigungsabschnitt 22 angeformt ist. Der Profilkörper 35 hat einen Boden 36, der in einer zur Längsachse der Befestigungsanordnung senkrecht verlaufenden Ebene liegt. In der Mitte des Bodens 36 ist ein Durchgangsloch 37 (Fig. 9) gebildet, durch den sich der Zapfen 10 des Lösebolzens 6 hindurch erstreckt (Fig. 4).

Im zentralen Bereich des Profilkörpers 35 ist ein Rastarm 39 vorgesehen, der an seinem einen Ende 41 mit dem Boden 36 des Profilkörpers 35 gelenkig verbunden ist und von dort aus in zwei federnd auslenkbare Rasthaken 40 übergeht. Die beiden Rasthaken 40 sind durch einen zentralen Quersteg 42 miteinander verbunden, an dessen Unterseite der Zapfen 10 des Lösebolzens 6 angreift.

Seitliche Abschnitte des Profilkörpers 35 bilden mit dem zentral angeordneten Rastarm 39 zwei quer zu Längsachse der Befestigungsanordnung verlaufende Profilnuten 43, die im dargestellten Ausführungsbeispiel einen ungefähr T-förmigen Querschnitt haben. Der Profilkörper 35 und der Rastarm 39 sind bezüglich einer durch die Achse der Befestigungsanordnung verlaufenden Ebene spiegelsymmetrisch ausgebildet. Die Profilnuten 43 sind daher ebenfalls bezüglich dieser Axialebene spiegelsymmetrisch angeordnet. An der Oberseite des Bodens 36 sind parallel zu den Profilnuten 43 verlaufende Rippen 44 vorgesehen, deren Zweck noch genauer erläutert wird.

Das am Trägerteil T zu befestigende Bauteil B (Figuren 10, 11) ist mit einem an den Profilkörper 35 des Rastgliedes 4 angepassten Rastabschnitt 46 versehen. Wie in den Figuren 10 und 11 dargestellt ist, besteht der Rastabschnitt 46 des Bauteils B aus zwei Profilleisten 48, 50, von denen die Profilleiste 48 einen T-förmigen Querschnitt und die Profilleiste 50 einen L-förmigen Querschnitt hat. Die Form der Profilleisten 48, 50 ist so gewählt, dass sie in die Profilnuten 43 des Profilkörpers 35 einschiebbar sind. Am Ende der Profilleisten 48, 50 sind Rastvertiefungen 52 vorgesehen, in die die Rasthaken 40 des Rastarmes 39 des Rastgliedes 4 einrasten können.

Es wird nun zunächst die Vormontage der Befestigungsanordnung 2 (Figuren 1 bis 5) beschrieben. Bei der Vormontage wird der Lösebolzen 6 mit dem Zapfen 10 voraus in den hülsenartigen Befestigungsabschnitt 22 des Rastgliedes 4 eingeführt. Hierbei gleiten die Nocken 16 des Lösebolzens 6 an den Schrägflächen 34 des Rastabschnittes 22 (Figuren 4 und 9) entlang, wodurch der elastisch verformbare hülsenartige Befestigungsabschnitt 22 des Rastgliedes 4 ovalartig aufgeweitet wird, bis die Nocken 16 in die Nockenschlitze 32 einschnappen. Bei dieser Zusammensteckbewegung gelangt der Zapfen 10 des Lösebolzens 6 in das zentrale Durchgangsloch 37 am Boden 36 des Rastabschnittes 24.

Der Lösebolzen 6 wird im Inneren des hülsenartigen Befestigungsabschnittes 22 des Rastgliedes 4 durch die ringförmigen Rippen 12 und 14 so geführt, dass der Lösebolzen 6 innerhalb des hülsenartigen Befestigungsabschnittes 22 des Rastgliedes 4 sowohl axial verschiebbar wie auch drehbar ist. Wie bereits erwähnt, bilden die Nocken 16 und die Nockenschlitze 32 eine Nockenführung, die eine Drehbewegung des Lösebolzens 6 in eine Axialverschiebung desselben umwandelt. Zumindest die Rippen 12 sind gegenüber dem Innendurchmesser des hülsenartigen Befestigungsabschnittes 22 überdimensioniert, um zusätzlich zu ihrer Führungsfunktion eine Dichtwirkung auszuüben.

Die auf diese Weise vormontierte Befestigungsanordnung 2 kann nun an dem Trägerteil T (Karosserieblech, Fig. 9) angebracht werden. Zu diesem Zweck wird die Befestigungsanordnung 2 von oben in das Aufnahmeloch des Trägerteils T eingesteckt. Hierbei wird der Befestigungsabschnitt 22 des Rastgliedes 4 zu dem mehreckigem Umriss des Aufnahmeloches des Trägerteils T ausgerichtet. Die Federschenkel 30 werden bei diesem Einführvorgang radial einwärts umgebogen. Wenn sich die Dichtlippe 28 des Ringflansches 26 an das Trägerteil T angelegt hat, wird der Ringflansch 26 durch weiteren axialen Druck auf die Befestigungsanordnung unter elastischer Verformung etwas aufgebogen, so dass der Abstand zwischen der Dichtlippe 28 und den Stirnflächen der Federschenkel 30 entsprechend vergrößert wird. Die Federschenkel 30 können nun in ihre Ausgangslage zurückfedern. Wird dann der axiale Druck auf die Befestigungsanordnung 2 gelöst, so wird das Trägerteil T aufgrund der elastischen Vorspannung des Ringflansches 26 zwischen dem Ringflansch 26 und den Federschenkeln 30 eingespannt. Die Befestigungsanordnung 2 ist damit an dem Trägerteil T festgelegt.

Das Bauteil B (Rückleuchtengehäuse) kann nun mit dem Rastglied 4 verbunden werden. Zu diesem Zweck werden die Profilleisten 48, 50 des Rastabschnittes 46 des Bauteils B (Figuren 10, 11) seitlich in die Profilnuten 43 des Profilkörpers 35 eingeschoben, bis die Rasthaken 40 in die Rastvertiefungen 52 einschnappen. Der Rastabschnitt 46 des Bauteils B und der Rastabschnitt 24 des am Trägerteil T festgelegten Rastgliedes 4 stehen somit in Rasteingriff miteinander, wodurch das Bauteil B (Rückleuchtengehäuse) lösbar am Trägerteil T (Karosserieblech) befestigt ist.

Obwohl die Profilleisten 48 und 50 des Rastabschnittes 48 am Bauteil B aus platz- und fertigungstechnischen Gründen ungleiche Querschnitte haben, kann die Befestigungsanordnung 2 sowohl für die rechtsseitige wie auch die linksseitige Rückleuchte des Fahrzeuges verwendet werden. Dies wird dadurch ermöglicht, dass der Profilkörper 35 und der Rastarm 39 und somit die Profilnuten 43 spiegelsymmetrisch zu einer Axialebene ausgebildet sind.

Die am Boden 36 des Profilkörpers 35 vorgesehenen Rippen 44 gleichen Fertigungstoleranzen des Rastgliedes 4 und/oder des Bauteils B aus, wodurch ein ratterfreier Festsitz des Bauteils B am Rastglied 4 sichergestellt wird.

Die als Dichtrippen wirkenden Rippen 12 des Lösebolzens 6 einerseits und die Dichtlippe 28 am Ringflansch 26 des Rastgliedes 4 andererseits sorgen für eine einwandfreie Abdichtung zwischen der Innen- und Außenseite des Trägerteils T (Karosserieblech).

Wenn das Bauteil B auf diese Weise mit dem Trägerteil T lösbar verbunden ist, ragt der Lösebolzen 6 mit seinem Schaftabschnitt 8 über das Rastglied 4 hinaus in den Fahrzeuginnenbereich. Die Länge des Schaftabschnittes 8 des Lösebolzens 6 wird so dimensioniert, dass das Antriebsmerkmal 18 des Lösebolzens 6 zum Ansetzen eines Werkzeuges (nicht gezeigt) bequem zugänglich ist.

Wenn nun der Lösebolzen 6 mit Hilfe eines entsprechenden Werkzeuges um eine Vierteldrehung gedreht wird, wird der Lösebolzen 6 und damit sein Zapfen 10 aufgrund der Nockenführung 16, 32 axial verschoben. Die axiale Verschiebung des Lösebolzens 6 bewirkt, dass der Zapfen 10 den Rastarm 39 des Rastgliedes 4 entsprechend auslenkt, wodurch die Rasthaken 40 aus den Rastvertiefungen 52 bewegt werden. Der Rasteingriff zwischen dem Bauteil B und der Befestigungsanordnung 2 ist damit gelöst, so dass das Bauteil B entfernt werden kann. Im dargestellten Ausführungsbeispiel kann daher beispielsweise die Rückleuchte ausgewechselt werden.

Wenngleich somit die Rastverbindung zwischen der Befestigungsanordnung 2 und dem Bauteil B im eingebauten Zustand nicht unmittelbar zugänglich ist, kann die Rastverbindung über den Lösebolzen 6 in einfacher Weise gelöst werden. Die erneute Montage des Bauteils B an der Befestigungsanordnung 2 erfolgt dann wieder in der oben beschriebenen Weise.

## Patentansprüche

1. Befestigungsanordnung zum lösbaren Befestigen eines Bauteils (B) an einem plattenförmigen Trägerteil (T), insbesondere eines Rückleuchtenteils an einem Karosserieteil eines Fahrzeugs, bestehend aus
einem Rastglied (4) mit einem an dem Trägerteil (T) festlegbaren hülsenartigen Befestigungsabschnitt (22) und einem an dem Befestigungsabschnitt (22) angeformten Rastabschnitt (24), der zum Halten des Bauteils (B) mit einem entsprechend ausgebildetem Rastabschnitt (46) des Bauteils (B) in Rasteingriff bringbar ist, und
einem Lösebolzen (6), der in dem hülsenartigen Befestigungsabschnitt (22) des Rastgliedes (4) axial verschiebbar geführt ist, mit einem Schaftabschnitt (8) aus dem hülsenartigen Befestigungsabschnitt vorsteht und zum Lösen des Rasteingriffes zwischen den Rastabschnitten (24, 46) axial verstellbar ist.

2. Befestigungsanordnung nach Anspruch 1, **dadurch gekennzeichnet, dass** der Lösebolzen (6) mit dem Rastglied (4) durch eine Nockenführung (16, 32) verbunden ist, die eine Drehbewegung des Lösebolzens in eine Axialbewegung des Lösebolzens umwandelt.

3. Befestigungsanordnung nach Anspruch 2, **dadurch gekennzeichnet, dass** die Nockenführung mindestens einen am Lösebolzen (6) vorgesehenen Nocken (16) und mindestens einen am Rastglied (4) vorgesehenen wendelförmig verlaufenden Nockenschlitz (32) aufweist.

4. Befestigungsanordnung nach Anspruch 3, **dadurch gekennzeichnet, dass** zum Einsetzen des Nockens (16) in den Nockenschlitz (32) eine axial verlaufende Schrägfläche (34) an der Innenseite des Rastgliedes (4) vorgesehen ist.

5. Befestigungsanordnung nach einem der Ansprüche 2 bis 4, **dadurch gekennzeichnet, dass** der Lösebolzen (6) an seinem vom Rastglied (4) abgewandten Ende mit einem Antriebsmerkmal (18) zum Drehen des Lösebolzens (6) versehen ist.

6. Befestigungsanordnung nach einem der vorhergehenden Ansprüche, **dadurch gekennzeichnet, dass** der Lösebolzen (6) durch ringförmige Rippen (12, 14) am Innenumfang des hülsenartigen Befestigungsabschnittes (22) des Rastgliedes (4) abgedichtet geführt ist.

7. Befestigungsanordnung nach einem der vorhergehenden Ansprüche, **dadurch gekennzeichnet, dass** der Rastabschnitt (24) des Rastgliedes (4) aufweist: einen Profilkörper (35) zum Aufnehmen des Rastabschnittes (46) des zu befestigenden Bauteils (B) und einen am Profilkörper (35) federnd angelenkten Rastarm (39) zum Verrasten mit dem Rastabschnitt (46) des zu befestigenden Bauteils (B).

8. Befestigungsanordnung nach Anspruch 7, **dadurch gekennzeichnet, dass** der Rastarm (39) in einem zentralen Bereich des Profilkörpers (35) angeordnet ist und zwei Rasthaken (40) aufweist, die mit Rastvertiefungen (52) am Rastabschnitt (46) des zu befestigenden Bauteils (B) zum Bilden des Rasteingriffes zusammenwirken.

9. Befestigungsanordnung nach Anspruch 7 oder 8, **dadurch gekennzeichnet, dass** der Profilkörper (35) und der Rastarm (39) bezüglich einer zentralen, durch die Achse der Befestigungsanordnung verlaufende Ebene spiegelsymmetrisch ausgebildet ist.

10. Befestigungsanordnung nach einem der Ansprüche 7 bis 9, **dadurch gekennzeichnet, dass** der Lösebolzen (6) einen an seinem einen Ende vorgesehenen, axial verlaufenden Zapfen (10) aufweist, der durch ein Durchgangsloch (37) des Profilkörpers (35) hindurch an dem Rastarm (39) angreift, um bei einer axialen Verstellung des Lösebolzens (6) den Rastarm (39) zum Lösen des Rasteingriffes zwischen den Rastabschnitten (24, 46) auszulenken.

11. Befestigungsanordnung nach einem der Ansprüche 8 bis 10, **dadurch gekennzeichnet, dass** der Profilkörper (35) mindestens eine quer zur Längsachse des Lösebolzens (6) verlaufende Profilnut (43) eines T- oder L-förmigen Querschnittes hat, in die eine entsprechend ausgebildete Profilleiste (48, 50) des zu befestigenden Bauteils (B) seitlich einschiebbar ist.

12. Befestigungsanordnung nach Anspruch 11, **dadurch gekennzeichnet, dass** am Boden (36) der Profilnut (43) parallel zur Einschieberichtung verlaufende Rippen (44) zum Ausgleichen von Fertigungstoleranzen des Rastgliedes (4) und/oder des zu befestigenden Bauteils (B) hat.

13. Befestigungsanordnung nach einem der vorhergehenden Ansprüche, **dadurch gekennzeichnet, dass** der Befestigungsabschnitt (22) des Rastgliedes (4) aus einem Ringflansch (26) und mehreren mit axialem Abstand zu diesen angeordneten Federschenkeln (30) besteht, die zum Einführen des Befestigungsabschnittes (22) in ein Aufnahmeloch des Trägerteils (T) radial einwärts umbiegbar und anschließend rückfederbar sind, um das Trägerteil (T) zwischen den Federschenkeln (30) und dem Ringflansch (26) einzuspannen.

14. Befestigungsanordnung nach Anspruch 13; **dadurch gekennzeichnet, dass** der Ringflansch (26) des Befestigungsabschnittes (22) des Rastgliedes (4) eine in Richtung der Federschenkel (30) konkav gewölbte Form mit einer am Umfang vorgesehenen Dichtlippe (28) zum elastischen Andrücken an das Trägerteil (T) aufweist.

15. Befestigungsanordnung nach einem der vorhergehenden Ansprüche, **dadurch gekennzeichnet, dass** das Rastglied (4) und der Lösebolzen (6) jeweils einstückig ausgebildet und durch Spritzgießen hergestellt sind.

16. Befestigungsanordnung nach einem der vorhergehenden Ansprüche, **dadurch gekennzeichnet, dass** das Rastglied (4) und der Lösebolzen (6) jeweils aus Kunststoff bestehen.

## Claims

1. A mounting assembly for releasably mounting a structural member (B) to a plate-shaped support member (T), in particular a rear light member to a body member of a vehicle, said mounting assembly comprising:
a locking member (4) including a sleeve-like mounting portion (22) adapted to be fixed to said support member (T), and a locking portion (24) integrally joined to said mounting portion (22), said locking portion (24) being adapted to snappingly engage a matingly shaped locking portion (46) of said structural member (B) for retaining said structural member (B), and
a release pin (6) axially slidable in said sleeve-shaped mounting portion (22) of said locking member (4), said release pin (6) having a shaft portion (8) project from said sleeve-shaped mounting portion (22) and being adapted to be axially displaced for releasing said locking portions (24, 46) from being snappingly engaged.

2. A mounting assembly according to claim 1, **characterized in that** said release pin (6) is connected to said locking member (4) via cam guide means (16, 32) adapted to transform rotational movements of said release pin (6) into axial movements of said release pin (6).

3. A mounting assembly according to claim 2, **characterized in that** said cam guide means includes at least one cam (16) provided at said release pin (6) and at least one helically extending cam slot (32) provided at said locking member (4).

4. A mounting assembly according to claim 3, **characterized in that** an axially extending inclined surface (34) is provided at an internal wall of said locking member (4) for enabling insertion of said cam (16) into said cam slot (32).

5. A mounting assembly according to one of the claims 2 to 4 **characterized in that** said release pin (6) has an end remote from said locking member (4) and provided with a drive feature (18) for enabling rotation of said release pin (6).

6. A mounting assembly according to any of the preceding claims, **characterized in that** said release pin (6) is sealingly guided at an internal periphery of said sleeve shaped mounting portion (22) of said mounting member (4) by annular ribs (12, 14).

7. A mounting assembly according to any of the preceding claims, **characterized in that** said locking portion (24) of said locking member (4) includes:
a profiled body (35) for receiving said locking portion (46) of said structural member (B), and a locking arm (39) resiliently and pivotally connected to said profiled body (35) for snappingly engaging said locking portion (46) of said structural member (B), said structural member (B) is to be mounted.

8. A mounting assembly according to claim 7, **characterized in that** said locking arm (39) is disposed in a central area of said profiled body (35) and includes a pair of locking hooks (40) which cooperate with locking depressions (52) at said locking portion (46) of said structural member (B) for providing locking engagement therebetween, said structural member (6) is to be mounted.

9. A mounting assembly according to claim 7 or 8, **characterized in that** said profiled body (35) and said locking arm (39) are of mirror symmetrical design with respect to a central plane extending through an axis of said mounting assembly.

10. A mounting assembly according to one of the claims 7 to 9, **characterized in that** said release pin (6) has an axially extending projection (10) provided at one end thereof, said projection (10) extending through a through-hole (37) of said profiled body (35) so as to engage said locking arm (39) in order to deflect said locking arm (39) for releasing said locking portions (24, 46) from being lockingly engaged when said release pin (6) is axially displaced.

11. A locking assembly according to one of the claims 8 to 10, **characterized in that** said profiled body (35) has at least one profiled groove (43) of T- or L-shaped cross section and extending transverse to a longitudinal axis of said release pin (6), said profiled groove (43) being adapted to slidingly receive a matingly shaped profiled ledge (48, 50) of the said structural member (B), said structural member (B) is to be mounted.

12. A mounting assembly according to claim 11, **characterized in that** a bottom surface (36) of said profiled groove (43) has ribs (44) for compensating manufacturing tolerances of said locking member (4) and/or of said structural member (B), which is to be mounted.

13. A mounting assembly according to any of the preceding claims, **characterized in that** said mounting portion (22) of said locking member (4) comprises an annular flange (26) and a plurality of spring legs (30) axially spaced therefrom, said spring legs (30) being adapted to be deflected radially inwards for inserting said mounting portion (22) into a receiving opening of said support member (T) and thereafter to be re-deflected in order to clamp said support member (T) between said spring legs (30) and said annular flange (26).

14. A mounting assembly according to claim 13, **characterized in that** said annular flange (26) of said mounting portion (22) of said locking member (4) is of concave arcuate shape towards said spring legs (30) and has a periphery provided with a sealing lip (28) to be urged resiliently against said support member (T).

15. A mounting assembly according to any of the preceding claims, **characterized in that** said locking member (4) and said release pin (6) each are of one-piece structure and are made by injection molding.

16. A mounting assembly according to any of the preceding claims, **characterized in that** said locking member (4) and said release pin (6) each are made of plastic material.

## Revendications

1. Dispositif de fixation pour la fixation amovible d'un élément de construction (B) sur un élément de support (T) en forme de plaque, en particulier d'un élément de feu arrière sur un élément de carrosserie d'un véhicule, comprenant
un organe d'encliquetage (4) avec une section de fixation (22) de type manchon pouvant être fixée sur l'élément de support (T) et une section d'encliquetage (24) formée sur la section de fixation (22), qui peut être amenée en prise encliquetée avec une section d'encliquetage (46) de l'élément de construction (B) constituée conformément pour maintenir l'élément de construction (B), et
une cheville de déblocage (6) qui est guidée de manière mobile axialement dans la section de fixation (22) de type manchon de l'organe d'encliquetage (4), dépasse de la section de fixation de type manchon avec une section de tige (8) et peut être déplacée axialement entre les sections d'encliquetage (24, 46) pour le déblocage de la prise encliquetée.

2. Dispositif de fixation selon la revendication 1, **caractérisé en ce que** la cheville de déblocage (6) est reliée à l'organe d'encliquetage (4) par un guidage à ergot (16, 32) qui transforme un mouvement de rotation de la cheville de déblocage en un mouvement axial de la cheville de déblocage.

3. Dispositif de fixation selon la revendication 2, **caractérisé en ce que** le guidage à ergot présente au moins un ergot (16) prévu sur la cheville de déblocage (6) et au moins une fente à ergot (32) s'étendant en forme hélicoïdale prévue sur l'organe d'encliquetage (4).

4. Dispositif de fixation selon la revendication 3, **caractérisé en ce qu'**une surface inclinée (34) s'étendant axialement est prévue sur la face intérieure de l'organe d'encliquetage (4) pour l'introduction de l'ergot (16) dans la fente à ergot (32).

5. Dispositif de fixation selon l'une des revendications 2 à 4, **caractérisé en ce que** la cheville de déblocage (6) est pourvue à son extrémité opposée à l'organe d'encliquetage (4) d'un dispositif d'entraînement (18) pour tourner la cheville de déblocage (6).

6. Dispositif de fixation selon l'une des revendications précédentes, **caractérisé en ce que** la cheville de déblocage (6) est guidée de manière étanche par des nervures annulaires (12, 14) sur la circonférence intérieure de la section de fixation (22) de type manchon de l'organe d'encliquetage (4).

7. Dispositif de fixation selon l'une des revendications précédentes, **caractérisé en ce que** la section d'encliquetage (24) de l'organe d'encliquetage (4) présente : un corps profilé (35) pour recevoir la section d'encliquetage (46) de l'élément de construction (B) à fixer et un bras d'encliquetage (39) articulé de manière résiliente au corps profilé (35) pour l'encliquetage avec la section d'encliquetage (46) de l'élément de construction (B) à fixer.

8. Dispositif de fixation selon la revendication 7, **caractérisé en ce que** le bras d'encliquetage (39) est disposé dans une zone centrale du corps profilé (35) et présente deux crochets d'encliquetage (40) qui coopèrent avec des enfoncements d'encliquetage (52) au niveau de la section d'encliquetage (46) de l'élément de construction (B) à fixer pour former la prise encliquetée.

9. Dispositif de fixation selon la revendication 7 ou 8, **caractérisé en ce que** le corps profilé (35) et le bras d'encliquetage (39) sont constitués de manière symétrique par rapport à un plan central s'étendant à travers l'axe du dispositif de fixation.

10. Dispositif de fixation selon l'une des revendications 7 à 9, **caractérisé en ce que** la cheville de déblocage (6) présente un tenon (10) s'étendant axialement prévu à l'une de ses extrémités qui agit en passant à travers un trou de passage (37) du corps profilé (35) sur le bras d'encliquetage (39) pour dévier le bras d'encliquetage (39) lors d'un déplacement axial de la cheville de déblocage (6) pour débloquer la prise encliquetée entre les sections d'encliquetage (24, 46).

11. Dispositif de fixation selon l'une des revendications 8 à 10, **caractérisé en ce que** le corps profilé (35) a au moins une rainure profilée (43) de section en T ou en L s'étendant transversalement par rapport à l'axe longitudinal de la cheville de déblocage (6) dans laquelle une baguette profilée (48, 50) de l'élément de construction (B) à fixer constituée conformément peut être insérée latéralement.

12. Dispositif de fixation selon la revendication 11, **caractérisé en ce que** dans le fond (36) de la rainure profilée (43) a des nervures (44) s'étendant parallèlement au sens d'insertion pour compenser des tolérances de fabrication de l'organe d'encliquetage (4) et/ou de l'élément de construction (B) à fixer.

13. Dispositif de fixation selon l'une des revendications précédentes, **caractérisé en ce que** la section de fixation (22) de l'organe d'encliquetage (4) comprend une bride annulaire (26) et plusieurs branches de ressort (30) disposées avec un écartement axial par rapport à celles-ci, qui peuvent être recourbées radialement vers l'intérieur pour l'introduction de la section de fixation (22) dans un trou de logement de l'élément de support (T) et peuvent ensuite subir un retour élastique pour serrer l'élément de support (T) entre les branches de ressort (30) et la bride annulaire (26).

14. Dispositif de fixation selon la revendication 13, **caractérisé en ce que** la bride annulaire (26) de la section de fixation (22) de l'organe d'encliquetage (4) présente une forme arquée concave en direction des branches de ressort (30) avec une lèvre d'étanchéité (28) prévue sur la circonférence pour la pression élastique contre l'élément de support (T).

15. Dispositif de fixation selon l'une des revendications précédentes, **caractérisé en ce que** l'organe d'encliquetage (4) et la cheville de déblocage (6) sont constitués respectivement d'une seule pièce et fabriqués par moulage par injection.

16. Dispositif de fixation selon l'une des revendications précédentes, **caractérisé en ce que** l'organe d'encliquetage (4) et la cheville de déblocage (6) sont composés respectivement de matière plastique.
